(19) Europäisches Patentamt
European Patent Office
Office européen des brevets

(11) Publication number : **0 361 537 B1**

(12) **EUROPEAN PATENT SPECIFICATION**

(45) Date of publication of patent specification : **10.03.93 Bulletin 93/10**

(51) Int. Cl.$^5$ : **A01N 47/36,** // (A01N47/36, 37:26, 37:22)

(21) Application number : **89120579.1**

(22) Date of filing : **17.03.87**

# (54) Herbicidal composition.

(43) Date of publication of application : **04.04.90 Bulletin 90/14**

(45) Publication of the grant of the patent : **10.03.93 Bulletin 93/10**

(84) Designated Contracting States : **AT BE CH DE ES FR GB GR IT LI LU NL SE**

(56) References cited :
**US-A- 4 668 277**
**CHEMICAL PATENTS INDEX-BASIC ABSTRACTS JOURNAL, section C: AGDOC, week 8620, 9th July 1986, Derwent Publications Ltd, London, GB; no. 86-128180/20 (NISSAN CHEM. IND. K.K.) 04-04-1986**
**CHEMICAL PATENTS INDEX-BASIC ABSTRACTS JOURNAL, section C: AGDOC, week 8714, 3rd June 1987, Derwent Publications Ltd, London, GB; no. 87-099075/14 (NISSAN CHEM. IND. K.K.) 03-03-1987**

(60) Publication number of the earlier application in accordance with Art. 76 EPC : **0 282 613**

(73) Proprietor : **NISSAN CHEMICAL INDUSTRIES, LIMITED**
**7-1, Kanda-Nishiki-cho 3-chome**
**Chiyoda-ku Tokyo 101 (JP)**

(72) Inventor : **Ikai, Takasi**
**7-19-7, Nishi-shinjuku**
**Shinjuku-ku Tokyo (JP)**

(74) Representative : **Kolb, Helga, Dr. Dipl.-Chem. et al**
**Hoffmann, Eitle & Partner Patentanwälte**
**Arabellastrasse 4**
**W-8000 München 81 (DE)**

EP 0 361 537 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

### BACKGROUND OF THE INVENTION

This invention relates to a herbicidal composition comprising, as active ingredients, a compound represented by the following formula I which is hereinafter referred to as Compound (I),:

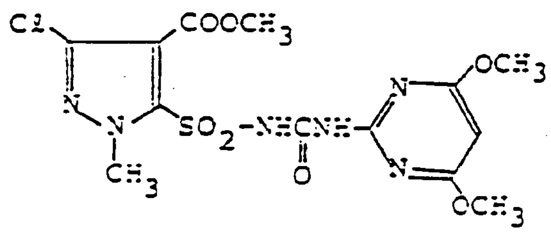

I

and at least one compound selected from 2-chloro-4-ethylamino-6-isopropylamino-1,3,5-triazine (common name: atrazine), 2-chloro-4-(1-cyano-1-methylethylamino)-6-ethylamino-1,3,5-triazine (common name: cyanazine), α-chloro-2′,6′-diethyl-N-methoxymethylacetanilide (common name: alachlor) and 2-chloro-N-(2-ethyl-6-methylphenyl)-N-(2-methoxy-1-methylethyl)acetamide (common name: metolachlor).

By researches and developments of herbicides over many years, various chemicals have been put to practical use and these herbicides have contributed to labor-saving in works for controlling weeds or improvements of productivity of crops in agriculture and horticulture. Even in these days, developments of novel chemicals having more excellent herbicidal characteristics are demanded. Particularly, while a herbicide for agriculture and horticulture is desired to control only target weeds selectively at a lower dose without having phytotoxicity on crops, the existing chemicals do not necessarily satisfy this requirement.

Compound (I) disclosed in Japanese Provisional Patent Publication No. 208977/1985 exhibits an excellent herbicidal effect at a lower dose as compared with herbicides of the prior art, and yet has high safety to crops such as corn, wheat, etc. Also, it exhibits excellent effect not only to annual grass weeds and annual broad leaf weeds but also exhibits potent effectiveness to perennial weeds, and therefore its usefulness is of great value.

Further, atrazine, cyanazine, alachlor and metolachlor, which are known in the art, are used for annual grass weeds such as barnyardgrass (Echinochloa crus-galli), Green foxtail (Setaria Viridis), Large crabgrass (Digitaria sanguinalis), etc., and annual broad leaf weeds in higher doses as compared with Compound (I). As a consequence, broad leaf weeds and perennial weeds which are resistant to these chemicals and can be controlled with difficulty by these chemicals are increasing, and therefore improvement thereof has been desired.

### SUMMARY OF THE INVENTION

The present inventor has made studies in order to increase the herbidical effect of Compound (I), and consequently found that by incorporating Compound (I) with atrazine, cyanazine, alachlor or metolachlor which have been conventionally used, the herbicidal effects of the respective compounds can be obtained not only additively, but also a synergistic weed killing effect appears, to accomplish the present invention.

### DETAILED DESCRIPTION OF THE PREFERRED EMBODIMENTS

This synergistic effect is great and, by use of the composition according to the present invention, annual weeds as well as perennial weeds, can be completely controlled at a lower dose without having phytotoxicity on corn, and therefore usefulness of this invention is great. Also, by use of a mixture described above, it becomes possible to reduce a dose of atrazine, cyanazine, alachlor and metolachlor to be used which are contained in the composition of the present invention and usefulness of the present invention is very high.

Further, the herbicidal composition of the present invention has also its effect by treatment either before or after emergence of weeds, and therefore a high effect can be obtained even by soil treatment or treatment of both caules and soil. Also, it is useful for various crops in addition to corn, and it is applicable for control of various weeds in other fields of agriculture and horticulture such as cultivated fields and fruits gardens and non-crop lands such as athletic fields, vacant, lands, forest lands, tank yards, railroad edges, etc., and it can exhibit a great economical effect in controlling weeds.

The composition according to the present invention generally contains 0.001 to 50 parts by weight of Compound (I) per one part by weight of atrazine, cyanazine, alachlor or metolachlor, although it may differ depending on the relative activities of the respective components.

In many cases, the best advantage of the mixed herbicides of the present invention can be obtained when the proportion of Compound (I) is lower than that of the other herbicide, for example, Compound (I) is used in an amount of 0.001 to 0.5 parts by weight per 1 part by weight of atrazine, cyanazine, alachlor or metolachlor.

The dose of the mixture to be applied, which may depend on a large number of factors such as the kinds of species of target plants of which growth is to be inhibited, may be generally suitably 0.01 to 10 Kg/ha as an active ingredient. Those skilled in the art can determine easily an appropriate use rate according to a standardized conventional test without carrying out a lot of experiments.

The composition of the present invention should be preferably used in the form of a composition comprising the active ingredients mixed with a carrier comprising a solid or liquid diluent. The composition may preferably further contain a surfactant.

In using the composition of the present invention as a herbicide, the composition may generally be used by mixing it with a suitable carrier, for example, a solid carrier such as clay, talc, bentonite, diatomaceous earth, etc., or a liquid carrier such as water, alcohols (methanol, ethanol, etc.), aromatic hydrocarbons (benzene, toluene, xylene, etc.), chlorinated hydrocarbons, ethers, ketones, esters (ethyl acetate, etc.), acid amides (dimethylformamide, etc.). The composition may optionally contain an emulsifying agent, a wetting agent, a dispersant, a binder, a penetrant, a spreader, a stabilizer, etc. and can be put to practical use in any form of preparation such as emulsifiable concentrate, soluble concentrate, wettable powder, dust, granule, suspension concentrate, etc.

The synergistic herbicidal effect of the herbicide mixture may be explained as follows. That is, individual active compounds may exhibit respective defects in herbicidal activity in many cases. In such a case, when the herbicidal activity obtained by combination of two kinds of active compounds becomes greater than the simple sum of the respective activities of the two kinds of the compounds (expected activity), this is called synergistic action. The activity expected from a specific combination of two kinds of herbicides can be calculated as follows (see Colby, S. R. Calculating synergistic and Antagonistic Response of Herbicide combinations, "Weed", Vol. 15, P. 20 to 22, 1967)

$$E = \alpha + \beta - \frac{\alpha . \beta}{100}$$

$\alpha$: the percent inhibition of growth by herbicide A at a Kg/ha;

$\beta$: the percent inhibition of growth by herbicide B at b Kg/ha;

E: the expected percent inhibition of growth by herbicides A + B at a + b Kg/ha.

Thus, when the observed response is greater than expected, the combination is synergistic.

The present invention is described in more detail by referring to the following examples, but the compounds, amounts of preparations, forms of preparations, etc., in the present invention are not limited only to these examples.

In examples, all the "part(s)" mean part(s) by weight.

Formulation example 1 Wettable powder

| | | |
|---|---|---|
| Compound (I) | ........ | 2.5 parts |
| Atrazine | ........ | 47.5 parts |
| Zeeklite A | ........ | 42 parts |
| (kaolin type clay; trade name, produced by Zeeklite Kogyo Co., Ltd.) | | |
| Sorpol 5039 | ........ | 2 parts |

(alkylether sulfate; trade name, produced by Toho Kagaku Co., Ltd.)

| | | |
|---|---|---|
| Soybean oil | ........ | 2 parts |
| Carplex (anticaking agent) | ...... | 4 parts |

(white carbon; trade name, produced by Shionogi Seiyaku Co., Ltd.)

The above components are mixed and pulverized homogeneously to prepare a wettable powder.

<u>Formulation example 2</u> Emulsifiable concentrate

| | | |
|---|---|---|
| Compound (I) | ........ | 1 part |
| Alachlor | ........ | 43 parts |
| Xylene | ........ | 35 parts |
| Dimethylformamide | ........ | 15 parts |
| Soybean oil | ........ | 1 part |
| Sorpol 2680 | ........ | 5 parts |

(a mixture of nonionic surfactant and anionic surfactant; trade name, produced by Toho Kagaku Co., Ltd.)

The above components are mixed homogeneously to prepare an emulsifiable concentrate.

<u>Formulation example 3</u> Wettable powder

| | | |
|---|---|---|
| Compound (I) | ........ | 5 parts |
| Cyanazine | ........ | 55 parts |
| Zeeklite A | ........ | 32 parts |

(kaolin type clay; trade name, produced by Zeeklite Kogyo Co., Ltd.)

| | | |
|---|---|---|
| Sorpol 5039 | ........ | 2 parts |

(alkylether sulfate; trade name, produced by Toho Kagaku Co., Ltd.)

| | | |
|---|---|---|
| Soybean oil | ........ | 2 parts |
| Carplex (anticaking agent) | ...... | 4 parts |

(white carbon; trade name, produced by Shionogi Seiyaku Co., Ltd.)

The above components are mixed and pulverized homogeneously to prepare a wettable powder.

Formulation example 4 Emulsifiable concentrate

| | | |
|---|---|---|
| Compound (I) | ........ | 1 part |
| Metolachlor | ........ | 40 parts |
| Xylene | ........ | 38 parts |
| Dimethylformamide | ........ | 15 parts |
| Soybean oil | ........ | 1 part |
| Sorpol 2680 | ........ | 5 parts |

(a mixture of nonionic surfactant and anionic surfactant; trade name, produced by Toho Kagaku Co., Ltd.)

The above components are mixed homogeneously to prepare an emulsifiable concentrate.

Formulation example 5 Flowable

Compound (I) ........ 2 parts
Atrazine ........ 24 parts
Agrisol S-710 ........ 10 parts
(nonionic surfactant; trade name, produced by Kao-Atlas Co., Ltd.)
Runox 1000C ........ 0.5 part
(anionic surfactant; trade name, produced by Toho Kagaku Co., Ltd.)
1% Rodopol water ........ 20 parts
(thickener; trade name, produced by Rohne Poulanc)
Water ........ 43.5 parts

The above components are mixed homogeneously to prepare a flowable.

Formulation example 6 Granule

| | | |
|---|---|---|
| Compound (I) | ........ | 0.1 part |
| Metolachlor | ........ | 1.0 part |
| Soybean oil | ........ | 1 part |
| Bentonite | ........ | 53.0 parts |
| Talc | ........ | 44.9 parts |

The above comonents were uniformly mixed and pulverized, then mixed and kneaded under stirring with addition of a small amount of water, and granulated by means of an extrusion type granulating machine, followed by drying to form granules.

Formulation example 7 Flowable

| | | | |
|---|---|---|---|
| Compound (I) | ........ | 1 | part |
| Cyanazine | ........ | 24 | parts |
| Agrisol S-710 | ........ | 10 | parts |

(nonionic surfactant; trade name, produced by Kao-Atlas Co., Ltd.)

| | | | |
|---|---|---|---|
| Runox 1000C | ........ | 0.5 | part |

(anionic surfactant; trade name, produced by Toho Kagaku Co., Ltd.)

| | | | |
|---|---|---|---|
| 1% Rodopol water | ........ | 20 | parts |

(thickener; trade name, produced by Rhône Poulenc)

| | | | |
|---|---|---|---|
| Water | ........ | 44.5 | parts |

The above components are mixed homogeneously to prepare a flowable.

Formulation example 8 Wettable powder

| | | | |
|---|---|---|---|
| Compound (I) | ........ | 1 | part |
| Alachlor | ........ | 43 | parts |
| Calcium carbonate | ........ | 36 | parts |
| Sorpol 5039 | ........ | 5 | parts |

(alkylether sulfate; trade name, produced by Toho Kagaku Co., Ltd.)

| | | | |
|---|---|---|---|
| Sorpol 5050 | ........ | 5 | parts |

(sodium dioctylsulfosuccinate; trade name, produced by Toho Kagaku Co., Ltd.)

| | | | |
|---|---|---|---|
| Carplex (anticaking agent) | ...... | 10 | parts |

(white carbon; trade name, produced by Shionogi Seiyaku Co., Ltd.)

The above components are mixed and pulverized homogeneously to prepare a wettable powder.

Test example: Herbicidal effect test by soil treatment

Formulation example 9 Wettable powder

| | | | |
|---|---|---|---|
| Compound (I) | ........ | 1 | part |
| Metolachlor | ........ | 40 | parts |
| Diatomaceous earth | ........ | 56 | parts |
| Sorpol 5050 (sodium dioctylsulfosuccinate; trade name, produced by Toho Kagaku Co., Ltd.) | ........ | 10 | parts |
| Lignin sulfonate | ........ | 5 | parts |

The above components are mixed and pulverized homogeneously to prepare a wettable powder.

Test example: Herbicidal effect test by soil treatment

In a plastic box having a length of 30 cm, a width of 30 cm and a depth of 10 cm, there was placed a sterile upland soil. Respective seeds of Green foxtail (Setaria Viridis), Velvetleaf (Abutilon theophrasti), Redroot pigweed (Amaranthus retroflexus) and corn (Zea mays) were sown in spots, and further tubers of Yellow nutsedge (Cyperus esculentus) were planted followed by covering soil to about 1.0 cm over the seeds. The next day, before emergence of weeds of the plants, herbicides were sprayed evenly in such a manner that the amount of active ingredient of each chemical reaches the predetermined proportion.

In spraying, the wettable powder, the emulsifiable concentrate or the flowable suitably prepared according to the formulation examples described above, were diluted with water and sprayed by means of a small sprayer. Four weeks after spraying, fresh weight of aerial part of the respective weeds were measured and a control rate (%) was determined by the following formula.

$$\text{control rate (\%)} = \left(1 - \frac{\text{fresh weight of aerial part of treated weeds}}{\text{fresh weight of aerial part of treated weeds}}\right) \times 100$$

Table 1 shows the results of the test in which Compound (I), atrazine, cyanazine, alachlor and metolachlor were used singly, and Table 2 shows the results of the test in which Compound (I) was mixed with the respective chemicals.

Table 1 Herbicidal effect of single herbicide

| Compound | Dose of active ingredient applied g/ha | control rate (%) | | | | |
|---|---|---|---|---|---|---|
| | | Z.M. | S.V. | A.T. | A.R. | C.E. |
| Compound (I) | 2.5 | 0 | 14 | 16 | 13 | 34 |
| | 10 | 0 | 24 | 48 | 46 | 80 |
| | 40 | 0 | 46 | 91 | 91 | 100 |
| atrazine | 125 | 0 | 48 | 11 | 46 | 0 |
| | 500 | 0 | 67 | 69 | 100 | 12 |
| cyanazine | 125 | 0 | 36 | 23 | 59 | 0 |
| | 500 | 0 | 79 | 69 | 100 | 12 |
| alachlor | 125 | 0 | 91 | 0 | 33 | 36 |
| | 1000 | 0 | 100 | 24 | 68 | 78 |
| metolachlor | 250 | 0 | 100 | 0 | 27 | 44 |
| | 1000 | 0 | 100 | 12 | 58 | 83 |

(The marks in the table represents the following plants.)

Z.M. : Corn (Zea mays)

S.V. : Green foxtail (Setaria viridis)

A.T. : Velvetleaf (Abutilon theophrasti)

A.R. : Redroot pigweed (Amaranthus retroflexus)

C.E. : Yellow nutsedge (Cyperus esculentus)

Table 2 Herbicidal effect of the combination (1)

| Dose of mixed ingredient applied (g/ha) | control rate (%) | | | | | | | | | |
|---|---|---|---|---|---|---|---|---|---|---|
| | Z.M. | | S.V. | | A.T. | | A.R. | | C.E. | |
| atrazine + Compd. (I) | Vf | Vc | Vf | Vc | Vf | Vc | Vf | Vc | Vf | Vc |
| 125 + 2.5 | 0 | 0 | 83 | 55 | 61 | 25 | 88 | 53 | 71 | 34 |
| 125 + 10 | 0 | 0 | 96 | 61 | 88 | 54 | 100 | 70 | 100 | 80 |
| 125 + 40 | 0 | 0 | 99 | 72 | 100 | 92 | 100 | 95 | 100 | 100 |
| 500 + 2.5 | 0 | 0 | 100 | 71 | 100 | 74 | 100 | 100 | 85 | 42 |
| 500 + 10 | 0 | 0 | 100 | 75 | 100 | 84 | 100 | 100 | 100 | 82 |
| 500 + 40 | 0 | 0 | 100 | 82 | 100 | 97 | 100 | 100 | 100 | 100 |

In the table, Vf shows a found value and Vc shows a calculated value determined by the formula of Colby.

Table 2 Herbicidal effect of the combination (2)

| Dose of mixed ingredient applied (g/ha) | control rate (%) | | | | | | | | | |
|---|---|---|---|---|---|---|---|---|---|---|
| | Z.M. | | S.V. | | A.T. | | A.R. | | C.E. | |
| cyanazine + Compd. (I) | Vf | Vc | Vf | Vc | Vf | Vc | Vf | Vc | Vf | Vc |
| 125 + 2.5 | 0 | 0 | 76 | 45 | 69 | 35 | 100 | 64 | 75 | 34 |
| 125 + 10 | 0 | 0 | 85 | 51 | 89 | 60 | 100 | 78 | 100 | 80 |
| 125 + 40 | 0 | 0 | 91 | 65 | 100 | 93 | 100 | 96 | 100 | 100 |
| 500 + 2.5 | 0 | 0 | 100 | 82 | 100 | 74 | 100 | 100 | 83 | 42 |
| 500 + 10 | 0 | 0 | 100 | 84 | 100 | 84 | 100 | 100 | 100 | 82 |
| 500 + 40 | 0 | 0 | 100 | 89 | 100 | 97 | 100 | 100 | 100 | 100 |

In the table, Vf shows a found value and Vc shows a calculated value determined by the formula of Colby.

Table 2 Herbicidal effect of the combination (3)

| Dose of mixed ingredient applied (g/ha) | control rate (%) | | | | | | | | | |
|---|---|---|---|---|---|---|---|---|---|---|
| | Z.M. | | S.V. | | A.T. | | A.R. | | C.E. | |
| alachlor + Compd. (I) | Vf | Vc | Vf | Vc | Vf | Vc | Vf | Vc | Vf | Vc |
| 250 + 2.5 | 0 | 0 | 100 | 92 | 48 | 16 | 79 | 42 | 95 | 58 |
| 250 + 10 | 0 | 0 | 100 | 93 | 81 | 48 | 99 | 64 | 100 | 87 |
| 250 + 40 | 0 | 0 | 100 | 95 | 100 | 91 | 100 | 94 | 100 | 100 |
| 1000 + 2.5 | 0 | 0 | 100 | 100 | 71 | 36 | 100 | 72 | 100 | 85 |
| 1000 + 10 | 0 | 0 | 100 | 100 | 98 | 61 | 100 | 82 | 100 | 96 |
| 1000 + 40 | 0 | 0 | 100 | 100 | 100 | 93 | 100 | 97 | 100 | 100 |

In the table, Vf shows a found value and Vc shows a calculated value determined by the formula of Colby.

Table 2 Herbicidal effect of the combination (4)

| Dose of mixed ingredient applied (g/ha) | control rate (%) | | | | | | | | | |
|---|---|---|---|---|---|---|---|---|---|---|
| | Z.M. | | S.V. | | A.T. | | A.R. | | C.E. | |
| metolachlor + Compd. (I) | Vf | Vc | Vf | Vc | Vf | Vc | Vf | Vc | Vf | Vc |
| 250 + 2.5 | 0 | 0 | 100 | 100 | 50 | 16 | 77 | 36 | 98 | 64 |
| 250 + 10 | 0 | 0 | 100 | 100 | 79 | 48 | 99 | 60 | 100 | 89 |
| 250 + 40 | 0 | 0 | 100 | 100 | 100 | 91 | 100 | 93 | 100 | 100 |
| 1000 + 2.5 | 0 | 0 | 100 | 100 | 61 | 26 | 100 | 63 | 100 | 89 |
| 1000 + 10 | 0 | 0 | 100 | 100 | 92 | 54 | 100 | 77 | 100 | 97 |
| 1000 + 40 | 0 | 0 | 100 | 100 | 100 | 92 | 100 | 96 | 100 | 100 |

In the table, Vf shows a found value and Vc shows a calculated value determined by the formula of Colby.

As is apparent from the above results, the composition of the present invention has not only mere sum of the respective activities of Compound (I) and the above herbicide known in the art, but a greater synergistic herbicidal activity. Further, it can control selectively and completely the target weeds at a low dose.

## Claims

### Claims for the following Contracting States : AT, BE, CH, DE, FR, GB, GR, IT, LI, LU, NL, SE

1. A herbicidal composition comprising, as active ingredients, a compound represented by the following formula I:

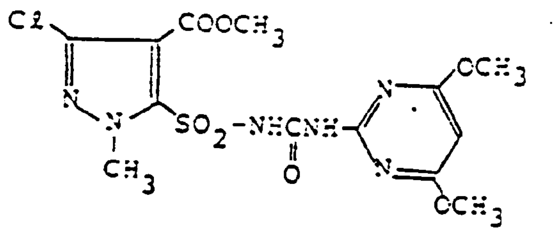

I

and at least one compound selected from alpha-chloro-2′,6′diethyl-N-methoxymethylacetanilide (common name: alachlor), or 2-chloro-N-(2-ethyl-6-methylphenyl)-N-(2-methoxy-1-methylethyl)acetamide (common name: metolachlor).

2. The herbicidal composition according to claim 1 which contains 0.001 to 50 parts by weight of the compound represented by formula I per one part by weight of alachlor or metolachlor.

3. The herbicidal composition according to claim 2 which contains 0.001 to 0.5 part by weight of the compound represented by formula I per one part by weight of alachlor or metolachlor.

### Claims for the following Contracting State : ES

1. A herbicidal composition comprising, as active ingredients,
   a) 0.001 to 50 parts by weight of a compound represented by the following formula I:

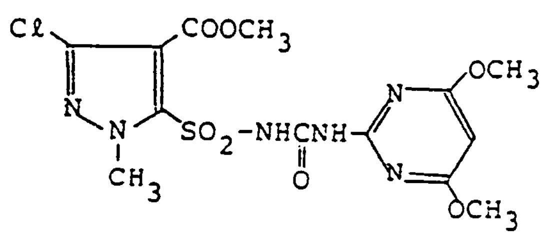

I

and
b) 1 part by weight of at least one compound selected from alpha-chloro-2′,6′-diethyl-N-methoxymethylacetanilide (common name: alachlor), or 2-chloro-N-(2-ethyl-6-methylphenyl)-N-(2-methoxy-1-methylethyl)acetamide (common name: metolachlor).

2. The herbicidal composition according to claim 1 which contains 0.001 to 0.5 parts by weight of the compound represented by formula I per one part by weight of alachlor or metolachlor.

## Patentansprüche

### Patentansprüche für folgende Vertragsstaaten : AT, BE, CH, DE, FR, GB, GR, IT, LI, LU, NL, SE

1. Herbizidzusammensetzung, umfassend als aktiven Inhaltsstoff eine Verbindung, dargestellt durch die folgende Formel I:

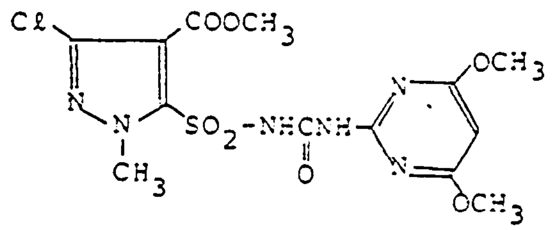

I

und mindestens eine Verbindung, ausgewählt aus alpha-Chloro-2′,6′-diethyl-N-methoxymethylacetanilid (Trivialname: Alachlor), oder 2-Chloro-N-(2-ethyl-6-methylphenyl)-N-(2-methoxy-1-methylethyl)acetamid (Trivialname: Metolachlor).

2. Herbizidzusammensetzung gemäß Anspruch 1, welche 0,001 bis 50 Gew.-Teile der durch Formel I dargestellten Verbindung pro Gew.-Teile Alachlor oder Metolachlor enthält.

3. Herbizidzusammensetzung gemäß Anspruch 2, welche 0,001 bis 0,5 Gew.-Teile der durch Formel I dargestellten Verbindung pro Gew.-Teile Alachlor oder Metolachlor enthält.

**Patentansprüche für folgenden Vertragsstaat : ES**

1. Herbizidzusammensetzung, umfassend als aktive Inhaltsstoffe
   a) 0,001 bis 50 Gew.-Teile einer Verbindung, dargestellt durch die folgende Formel I:

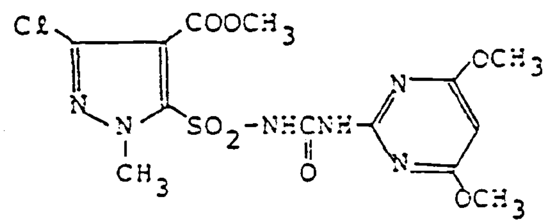

I

und

b) 1 Gew.-Teil von mindestens einer Verbindung, ausgewählt aus alpha-Chloro-2′,6′-diethyl-N-methoxymethylacetanilid (Trivialname: Alachlor), oder 2-Chloro-N-(2-ethyl-6-methylphenyl)-N-(2-methoxy-1-methylethyl)acetamid (Trivialname: Metolachlor).

2. Herbizidzusammensetzung gemäß Anspruch 1, welche 0,001 bis 0,5 Gew.-Teile der Verbindung, dargestellt durch die Formel I pro 1 Gew.-Teil Alachlor oder Metolachlor enthält.

**Revendications**

**Revendications pour les Etats contractants suivants : AT, BE, CH, DE, FR, GB, GR, IT, LI, LU, NL, SE**

1. Composition herbicide comprenant, en tant que composants actifs, un composé représenté par la formule (I) suivante:

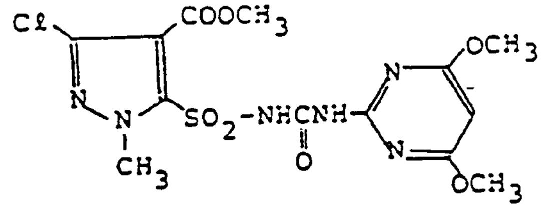

(I)

et au moins un composé choisi parmi l'α-chloro-2′,6′-diéthyl-N-méthoxyméthylacétanilide (nom courant : alachlor) ou le 2-chloro-N-(2-éthyl-6-méthylphényl)-N-(2-méthoxy-1-méthyléthyl)-acétamide (nom courant : metolachlor).

2. Composition herbicide suivant la revendication 1, qui contient 0,001 à 50 parties en poids du composé représenté par la formule (I) pour une partie en poids d'alachlor ou de metolachlor.

3. Composition herbicide suivant la revendication 2, qui contient 0,001 à 0,5 parties en poids du composé représenté par la formule (I) pour une partie en poids d'alachlor ou de metolachlor.

**Revendications pour l'Etat contractant suivant : ES**

1. Composition herbicide comprenant, en tant que composants actifs,
a) 0,001 à 50 parties en poids d'un composé représenté par la formule (I) suivante:

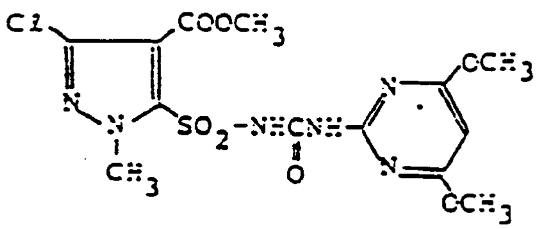

(I)

et
b) 1 partie en poids d'au moins un composé choisi parmi l'α-chloro-2',6'-diéthyl-N-méthoxyméthylacétanilide (nom courant : alachlor) ou le 2-chloro-N-(2-éthyl-6-méthylphényl)-N-(2-méthoxy-1-méthyléthyl)-acétamide (nom courant : metolachlor).

2. Composition herbicide suivant la revendication 1, qui contient 0,001 à 0,5 parties en poids du composé représenté par la formule (I) pour une partie en poids d'alachlor ou de metolachlor.